# EUROPEAN PATENT APPLICATION

(11) **EP 4 802 871 A1**
(43) Date of publication of application: **09.09.2026**
(21) Application number: 26152781.6
(22) Date of filing: 20.01.2026
(51) Int. Cl.: A01B 73/04, A01B 73/06, A01B 29/04

(54) **FOLDING DEVICE FOR AN AGRICULTURAL TILLAGE MACHINE**

(30) Priority: 03.03.2025 CZ 20250074
(71) Applicant: Bednar FMT s.r.o., 190 17 Praha, Vinor (CZ)
(72) Inventor: Syrovatka, Pavel, 41301 Klenec (CZ); Krepcik, Vaclav, 43907 Peruc (CZ); Setnicka, Antonin, 25763 Trhovy Stepanov (CZ); Fiser, Pavel, 27741 Tuhan (CZ)
(74) Representative: Dadej, Leopold

(57) **Abstract**

A folding device for an agricultural tillage machine comprises a central frame (1) and at least two lateral foldable arms (2) rotatably movable between a working position and a transport position. Each lateral foldable arm (2) comprises at least one pivotably mounted working tool (3). Each of the lateral foldable arms (2) further comprises at least one stop element (4) and at least one support element (5), wherein one of these elements is mounted on the lateral foldable arm (2) pivotably together with the working tool (3), and the working tool (3) is pivotably movable relative to the other one of these elements. In the transport position, at least one stop element (4) of the first one of these lateral foldable arms (2) is braced against at least one support element (5) of the second one of these lateral foldable arms (2), and at least one stop element (4) of the second one of these lateral foldable arms (2) is braced against at least one support element (5) of the first one of these lateral foldable arms (2).

## Description

### Technical Field

The present invention relates to a folding device for an agricultural tillage machine with working tools pivotably mounted on lateral foldable arms. Specifically, the invention relates to, for example, a folding device where the working tools are cutting rollers.

### Background of the Invention

In the current state of the art, agricultural machines are known that use working tools for tillage, e.g., cutting rollers, which are arranged on a central frame and also on lateral foldable arms. By unfolding these lateral foldable arms away from the central frame (i.e., into their working position), it is possible to increase the width of the area tilled by the machine, and conversely, by folding them toward the central frame, a spatially less demanding transport position is created, in which the working tools are transported but not used. The working tools are usually mounted on the foldable arms pivotably such that they better follow the ground surface of the ground during tillage and such that the machine can till even more uneven terrain.

However, the aforementioned pivotable movement of the working tools, desirable during tillage, may be problematic in the transport position. The swinging of the tools may, e.g., cause the entire machine to sway, or the maximum dimensions of the machine permissible for transport may be exceeded. Therefore, it is desirable to secure the foldable arms.

Solutions exist in the patent literature in which both foldable arms are braced against a certain support element arranged on the central frame. These are, e.g., the solutions described in the documents KR20150100034 A, EP0044569 A1, or CN220556838 U.

In the document KR20150100034 A, a support element in the shape of the letter Y is used, which is common to both foldable arms, and both foldable arms are supported by it in the transport position such that they are inclined by a certain angle relative to the horizontal plane.

In the document EP0044569 A1, two individual support elements arranged on the central frame are used to support the foldable arms, wherein in the transport position, one foldable arm is oriented horizontally and the opposite foldable arm is inclined by a certain angle relative to the horizontal plane.

Similarly, in the solution according to CN220556838 U, individual support blocks for the foldable arms are arranged on the central frame and stop members for contacting the corresponding support block in the transport position are located on the individual foldable arms. Both foldable arms are then oriented vertically in the transport position.

However, these solutions may not provide sufficiently reliable securement of the foldable arms. In particular, foldable arms that are inclined in the transport position by a certain angle or that are oriented vertically could fall out of this transport position due to swinging of the working tools or due to the jolting movement of the entire machine during travel on uneven terrain. For a more reliable fixation, it would be useful to use an additional lock or another securing device. This generally complicates the manufacture of the machine as well as its handling.

Another patent document EP0056118 A1 discloses a solution in which both foldable arms are oriented horizontally in the transport position, wherein the first foldable arm is supported by a stop member on the central frame and the second foldable arm comprises a stop member for support against the first foldable arm. Both foldable arms are thus folded over each other and are on top of each other. However, even this solution may not provide a sufficiently reliable securement of both foldable arms, as the second foldable arm is only supported against the first foldable arm positioned underneath it, and may thus, e.g., bounce during travel on uneven terrain. Here as well, it would be useful to use an additional securing element for reliable fixation. Moreover, as mentioned, one stop member is located on the foldable arm and the other stop member is located on the central frame. Therefore, it is necessary to modify both the central frame and the foldable arm, i.e., two different manufacturing components of the machine, which generally complicates the manufacture. The solutions according to all of the above documents require a certain modification of the central frame, which may be inefficient in terms of manufacturing costs.

Therefore, it would be desirable to come up with a solution that would allow sufficiently reliable securement of the foldable arms against unwanted pivotable movement of the working tools, without the need for an additional securing mechanism that would require user intervention or the use of electric or hydraulic actuation for its function, and without the need for any modification of the central frame.

### Summary of the Invention

The shortcomings of the solutions known from the state of the art are to a certain extent eliminated by a folding device for an agricultural tillage machine, wherein the folding device comprises a central frame and at least two lateral foldable arms. These lateral foldable arms are rotatably movably attached opposite each other to the central frame and are movable between a working position, in which the lateral foldable arms are unfolded away from the central frame and from each other, and a transport position, in which the lateral foldable arms are folded toward the central frame and toward each other, wherein each lateral foldable arm comprises at least one pivotably mounted working tool. The essence of the folding device according to the present invention lies in the fact that each of the lateral foldable arms further comprises at least one stop element and at least one support element, wherein one of these elements is mounted on the lateral foldable arm pivotably together with the working tool, and the working tool is pivotably movable relative to the other one of these elements. In the transport position, at least one stop element of the first one of these lateral foldable arms is braced against at least one support element of the second one of these lateral foldable arms, and at least one stop element of the second one of these lateral foldable arms is braced against at least one support element of the first one of these lateral foldable arms.

Thanks to this solution, the working tools may be secured against their pivotable movement by simply moving the lateral foldable arms to the transport position, and thus the unwanted swaying of the entire machine or exceeding the maximum dimensions permissible for transport may be prevented. In addition, no additional locking mechanism is needed for the securement of the working tools, which would require user intervention or the use of electric or hydraulic lines for its function. The pivotable movement of the working tools is prevented due to the mutual contact of the opposite lateral foldable arms, specifically by means of stop elements and support elements that are arranged on them, and therefore, there is also no need to modify the central frame of the folding device in any way. The central frame may thus remain simple and may comprise, e.g., only a connecting mechanism for connecting the folding device to a towing vehicle and, further, wheels or other means enabling travel behind the towing vehicle. The central frame may also comprise a working tool, which may or may not be mounted pivotably on the central frame. The central frame may alternatively be inclined at an angle relative to the ground.

The stop elements and support elements may be formed with various shapes or dimensions and may be attached to the corresponding part of the lateral foldable arm, e.g., by means of screws or other attachment means, or may alternatively extend from the corresponding part of the lateral foldable arm as an integral part thereof. The specific shape, dimensions, and position of the stop elements and support elements are chosen such that these elements may abut against each other in the transport position without any obstacles. In general, it can be said that the support element provides at least one support area and the stop element provides at least one contact area that are in mutual contact in the transport position of the lateral foldable arms.

The position of at least one stop element and at least one support element may be intrerchanged in principle. Thus, the support element may be mounted on the lateral foldable arm, e.g., pivotably together with the working tool, and the working tool is then pivotably movable relative to the stop element. Or, conversely, the stop element may be mounted pivotably on the lateral foldable arm together with the working tool, and the working tool is then pivotably movable relative to the support element.

The folding device according to the present invention may, if necessary, comprise more than two lateral foldable arms, e.g., it may comprise two pairs of lateral foldable arms. For example only one working tool may be pivotably mounted on each lateral foldable arm, or multiple working tools may be pivotably mounted on the lateral foldable arm, e.g., by means of multiple pivotable frames, as will be described below. The working tools may be, e.g., cutting rollers which, in addition to swinging, may also freely rotate around an axis that is perpendicular to the direction of travel when the lateral foldable arms are in the working position. Alternatively, the working tools may also be any other tools used with agricultural tillage machines, e.g., various discs, rods, chisels, ploughshares, tampers, etc. If the design of the given working tool allows it, one element of the support element and the stop element may be arranged directly on the working tool. It may be, e.g., attached in its upper part, as long as it does not interfere with the function of the working tool there. The pivotable mounting of the working tool itself thus automatically ensures that such an element is pivotably mounted together with the working tool. The pivotable mounting of the stop element or support element together with the working tool may thus be ensured by attachment of such an element either directly to the tool or to its carrier, which is, e.g., a pivotable frame.

As already stated, the opposite lateral foldable arms are unfolded away from the central frame and from each other in the working position of the lateral foldable arms. For example, the lateral foldable arms are oriented horizontally and perpendicular to the direction of travel in this position, but alternatively they may not be oriented exactly horizontally, e.g., if the central frame is inclined relative to the ground at a certain angle. Alternatively, they do not have to be oriented perpendicular to the direction of travel. In the working position, the pivotable movement around the axis is parallel to the direction of travel and in a plane perpendicular to the direction of travel due to the pivotable movement of the working tool. In other words, the working tools swing sideways in this position. The working position is used during tillage, wherein the pivotable mounting of the working tools serves to allow the working tools to better follow the uneven surface of the ground.

In the transport position, in which the described mutual bracing of the corresponding support elements and stop elements on opposite lateral foldable arms takes place, the lateral foldable arms are folded toward the central frame and toward each other. The resulting transport position of the lateral foldable arms relative to the central frame may generally vary depending on the manner in which the lateral foldable arms are folded, or depending on whether and how the central frame itself is folded. For example, folded lateral foldable arms may be oriented parallel to the central frame or also perpendicular to the central frame. The lateral foldable arms may also be folded toward the central frame up to a position in which they directly bear against the central frame, or they may be folded toward each other and only partially toward the central frame. Thus, the transport position may in principle also be considered to be a position in which the lateral foldable arms are oriented perpendicular to the central frame, if in this position the described mutual contact of the support elements and the stop elements occurs. However, this position may not be very spatially efficient with respect to the height of the folding device, and therefore the transport position is preferably further modified such that the central frame itself is also folded, as will be described below. The transport position is used for transporting working tools that are not currently being used for tillage.

The lateral foldable arm preferably comprises at least one foldable frame and at least one pivotable frame, wherein the pivotable frame is rotatably movably attached to the foldable frame. The foldable frame is attached to the central frame and at least one working tool is attached to the pivotable frame. Preferably, the pivotable mounting of the working tool is provided by means of the pivotable frame, which provides sufficient space for the attachment of larger working tools and also sufficient space for the placement of a support element or stop element. The pivotable frame is preferably oriented parallel to the foldable frame, but alternatively, it may also be oriented differently relative to the foldable frame depending on how the pivotable frame and foldable frame are shaped in particular and how their mutual connection is implemented. Multiple pivotable frames may be rotatably movably attached to each foldable arm, either in a row next to each other or behind each other, or one pivotable frame with a working tool may correspond to each foldable frame. The rotatably movable connection of the pivotable frame to the foldable frame may be implemented, e.g., by means of a pin arranged in an axis that is parallel to the direction of travel in the working position of the lateral foldable arms.

Preferably, one element of the stop element and support element is positioned on the foldable frame and the other element of the stop element and support element is positioned on the pivotable frame. Both the foldable frame and the pivotable frame provide sufficient space for the placement of at least one support element or at least one stop element, wherein these elements may thus be designed with different shapes and dimensions as needed without significant constraints. For example, at least one stop element may be positioned on the foldable frame and at least one support element may be positioned on the pivotable frame. Alternatively, however at least one stop element may be positioned on the pivotable frame and at least one support element may be positioned on the foldable frame.

The at least one stop element and the at least one support element are preferably mutually offset relative to each other on the lateral foldable arm in a direction perpendicular to the plane of the pivotable movement of the working tool. At least one stop element is then offset forward relative to at least one support element in the working position on one lateral foldable arm, and, conversely, at least one stop element is offset rearward relative to at least one support element in the working position on the opposite lateral foldable arm. This ensures that these elements may abut against each other in the transport position of the lateral foldable arms without any obstacles. The same effect can also be achieved by the corresponding stop elements and support elements being arranged differently inversely, e.g., such that they are mutually offset relative to each other on the lateral foldable arm in the direction of the pivotable movement, i.e., not forward or rearward but sideways.

The lateral foldable arm preferably comprises at least two support elements. This arrangement is preferable, e.g., in an embodiment where the foldable frame and the pivotable frame are mutually connected via a part that bridges the pivotable frame from above or from below. These at least two support elements may thus each be located on one side of the mentioned bridging part. In principle, however, it is sufficient if there is at least one support element and at least one stop element on each lateral foldable arm that mutually touch in the transport position, as already explained.

The stop element preferably comprises at least two contact areas for contact with at least two support elements of the opposite lateral foldable arm in the transport position. This stop element may have, e.g., an elongated and curved shape, on the ends of which the corresponding contact areas are located. The curvature is preferred, e.g., in the mentioned embodiment where the foldable frame and the pivotable frame are mutually connected via a part that bridges the pivotable frame from above. In the transport position, this bridging part is located at the location of the curvature of the opposite stop element, where it does not prevent the correct contact of the stop element with the opposite support elements. Alternatively, the stop element may comprise a cutout that performs the same function. Thus, even if preferably two support elements are used on each lateral foldable arm, one stop element common to both support elements is sufficient for the correct function on the given lateral foldable arm.

Alternatively, the lateral foldable arm may comprise at least two stop elements for contact with at least two support elements of the opposite lateral foldable arm in the transport position.

At least one support element is preferably a support plate. Thanks to its flat shape, the support plate does not take up too much space and leaves a lot of freedom for the design of the corresponding stop element on the opposite lateral foldable arm. The support plate or other support element, and possibly also the stop element, may preferably be made of, e.g., rubber or other material that reduces the risk of wear of these elements due to mutual impact and friction when moving the lateral foldable arms to the transport position.

The lateral foldable arms are preferably oriented in the transport position parallel to the central frame and in the direction of travel. This design is spatially efficient in both width and height of the folding device and can be achieved by, e.g., folding the central frame itself, as described in the next paragraph. If the central frame is oriented horizontally, the lateral foldable arms are also oriented horizontally in this position. If the central frame is inclined relative to the ground at a certain angle, the lateral foldable arms are also inclined relative to the ground at a certain angle in this position.

The central frame preferably comprises a fixed part of the central frame and a foldable part of the central frame, wherein the foldable part of the central frame is rotatably movably attached to the fixed part of the central frame and wherein the lateral foldable arms are rotatably movably attached to the foldable part of the central frame. Thus, in this embodiment, the lateral foldable arms are gradually moved to the transport position by double folding. First, the opposite foldable frames are folded toward the foldable part of the central frame such that they are perpendicular to the plane of the foldable part of the central frame, and subsequently the foldable part of the central frame is folded together with the foldable frames toward the fixed part of the central frame. Alternatively, the order of these steps may be changed, unless prevented by some part of the folding device.

The folding of the individual parts of the folding device, thus, e.g., the folding of the lateral foldable arms relative to the foldable part of the central frame and the folding of the foldable part of the central frame relative to the fixed part of the central frame, may be accomplished, e.g., by means of hydraulic cylinders. Alternatively, however, other known types of actuators may be used for the folding, or the folding may also be performed manually.

### Description of Drawings

A summary of the invention is further clarified using exemplary embodiments thereof, which are described with reference to the accompanying drawings, in which:
fig. 1 shows the folding device according to the first exemplary embodiment with the lateral foldable arms in the working position,
fig. 2 shows a rear view of pivotably mounted working tools according to the first exemplary embodiment,
fig. 3 shows a detailed view of the stop element and support elements on the lateral foldable arm according to the first exemplary embodiment,
fig. 4 shows the folding device according to the first exemplary embodiment with the lateral foldable arms in the transport position, and
fig. 5 shows a detailed view of the mutual contact of the stop element with the support elements of the opposite lateral foldable arm according to the first exemplary embodiment in the transport position.

### Exemplary Embodiments of the Invention

The invention will be further clarified using exemplary embodiments with reference to the corresponding drawings.

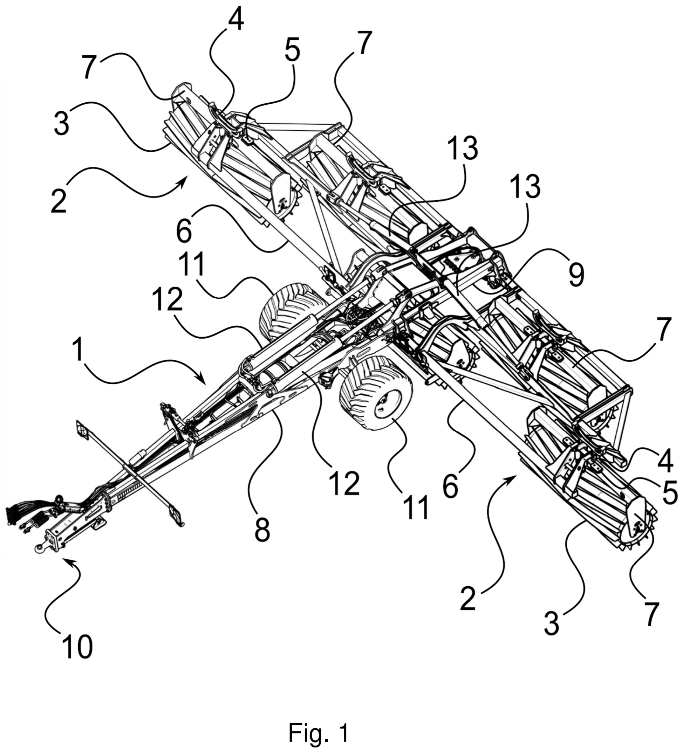

In the first exemplary embodiment, as shown in fig. 1 to fig. 5, the folding device for an agricultural tillage machine comprises a central frame 1 and, further, two lateral foldable arms 2 attached opposite each other on the opposite lateral sides of the central frame 1. In this exemplary embodiment, each lateral foldable arm 2 comprises two pivotably mounted working tools 3, which are, for example, cutting rollers. Another working tool 3 is then fixedly mounted also to the central frame 1.

For example, the central frame 1 has an elongated shape, at the front end of which there is a connecting mechanism 10 for connecting the folding device to a towing vehicle, e.g., a tractor, thereby forming the agricultural machine. For connection behind a towing vehicle, an axle with wheels 11 is also connected to the central frame 1.

In the first exemplary embodiment described, the central frame 1 comprises two basic parts, namely a fixed part 8 of the central frame 1 and a foldable part 9 of the central frame 1. The fixed part 8 of the central frame 1 comprises the already mentioned connecting mechanism 10 and the wheels 11 are attached to it, while the lateral foldable arms 2 with the working tools 3 and also one additional, central, working tool 3 are attached to the foldable part 9 of the central frame 1. The foldable part 9 of the central frame 1 is attached rotatably movably to the fixed part 8 of the central frame 1 such that it is movable between a first position, in which it is oriented parallel to the fixed part 8 of the central frame 1, and thus essentially forms an elongation of the central frame 1 in the direction of travel, and a second position, in which the foldable part 9 of the central frame 1 is oriented perpendicular to the fixed part 8 of the central frame 1, i.e., essentially vertically. The rotatably movable connection of the foldable part 9 of the central frame 1 and the fixed part 8 of the central frame 1 is implemented, for example, by means of at least one pin arranged in an axis perpendicular to the direction of travel and, further, by means of at least one first actuator 12. As can be seen in fig. 1, in this embodiment two first actuators 12, for example hydraulic cylinders, are specifically used, which are attached by one of their ends to the fixed part 8 of the central frame 1, and by the other of their ends, they are attached to the foldable part 9 of the central frame 1.

Each of the lateral foldable arms 2 comprises a foldable frame 6, which is rotatably movably attached to the foldable part 9 of the central frame 1. Specifically, each foldable frame 6 is rotatably movable between a first position, in which it lies in the plane of the foldable part 9 of the central frame 1, and a second position, in which the foldable frame 6 lies in a plane perpendicular to the plane of the foldable part 9 of the central frame 1. The rotatably movable connection of the foldable frames 6 and the foldable part 9 of the central frame 1 is implemented, for example, by means of pins arranged on the opposite lateral sides of the foldable part 9 of the central frame 1 in axes parallel to the direction of travel and, further, by means of at least two second actuators 13. As can be seen in fig. 1, two second actuators 13, for example hydraulic cylinders, are specifically used in this embodiment. One second actuator 13 is attached by one of its ends to the foldable part 9 of the central frame 1, and by the other of its ends, it is attached to one foldable frame 6. The remaining second actuator 13 is then also attached by one of its ends to the foldable part 9 of the central frame 1, and by the other of its ends, it is attached to the opposite foldable frame 6.

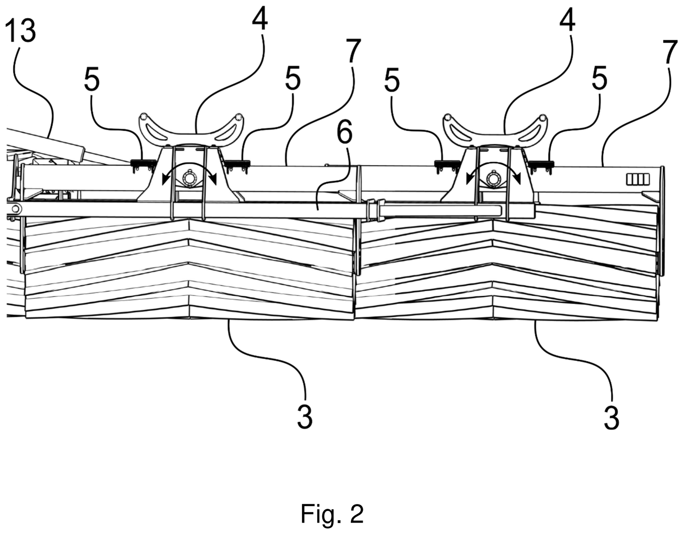

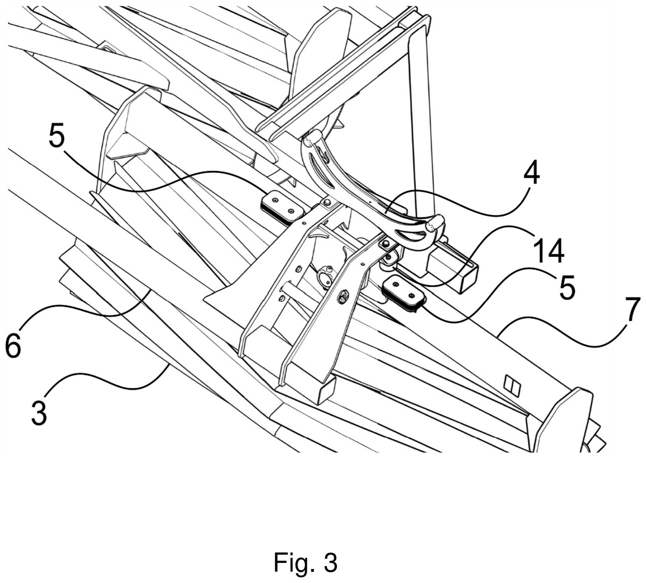

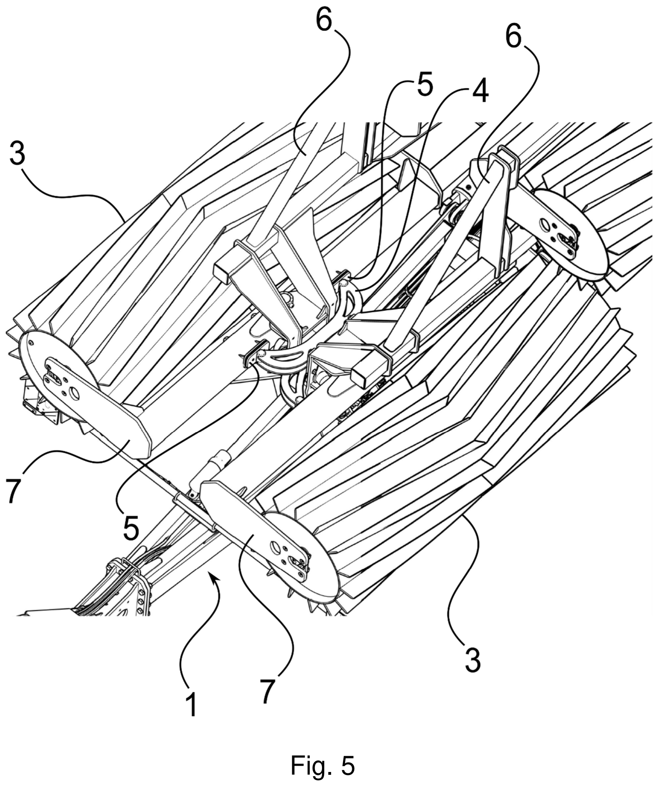

In the first exemplary embodiment described, two working tools 3 are pivotably mounted to each foldable frame 6. For this purpose, each foldable frame 6 comprises two pivotable frames 7, which are rotatably movably attached to the foldable frame 6, and to which the corresponding working tools 3 are attached. This rotatably movable connection is best visible in fig. 2, where it can be seen that the pivotable frame 7 is connected to the foldable frame 6 via a pin arranged in an axis that is parallel to the direction of travel in the working position of the lateral foldable arms 2. This pin therefore represents the axis of rotation of the pivotable frame 7 relative to the foldable frame 6. Specifically, the pin passes through the pivotable frame 7 and a part of the foldable frame 6, which bridges the pivotable frame 7 from above, as can be seen more clearly in fig. 3 or fig. 5. This part of the foldable frame 6 is offset above the pivotable frame 7 by a certain distance and comprises two washers 14 for delimiting the rotational movement of the pivotable frame 7 relative to the foldable frame 6. These washers 14 are, for example, silent blocks that simultaneously damp impacts. The pivotable frame 7 may thus swing between the extreme positions delimited by the contact with the individual washers 14, in the working position in a plane perpendicular to the direction of travel - i.e. sideways.

In the first exemplary embodiment described, the pivotable frame 7 has an elongated shape and is arranged parallel to the foldable frame 6, wherein at both ends the pivotable frame 7 is bent downward. The working tool 3, specifically a cutting roller, is rotatably movably attached to these vertically bent end parts of the pivotable frame 7. The cutting roller is thus located between these end parts of the pivotable frame 7 and may freely rotate around the axis perpendicular to the direction of travel when the lateral foldable arms 2 are in the working position.

As can be further seen in fig. 3 or fig. 5, two support elements 5 are attached to each pivotable frame 7, implemented, for example, as support plates. These support elements 5 are thus pivotably movable together with the working tool 3. A stop element 4 is also located near these support elements 5, which is, however, not pivotably movable together with the working tool 3 but is instead attached fixedly to the foldable frame 6, and thus the working tool 3 is pivotably movable relative to the stop element 4. Thus, the support elements 5 are pivotably movable relative to the stop element 4 as well.

For example, the stop element 4 is attached to the part of the foldable frame 6 that bridges the pivotable frame 7 from above, wherein in connection with this, the stop element 4 has a curved shape. Due to this curved shape, it is possible for the stop element 4 to come into contact with the support elements 5 on the opposite lateral foldable arm 2 in the transport position of the lateral foldable arms 2, as will be further described below, without obstacles. Thus, when the lateral foldable arms 2 are being folded, it is not possible for e.g., the stop element 4 to first impact the part of the foldable frame 6 that bridges the pivotable frame 7 from above on the opposite lateral foldable arm 2 before coming into contact with the support elements 5. Proper contact is also provided by the stop element 4 being mutually offset relative to the support elements 5 on the same lateral foldable arm 2 in a direction perpendicular to the plane of the pivotable movement of the working tool 3. Thanks to this, the stop elements 4 of the opposite lateral foldable arms 2 do not interfere with each other.

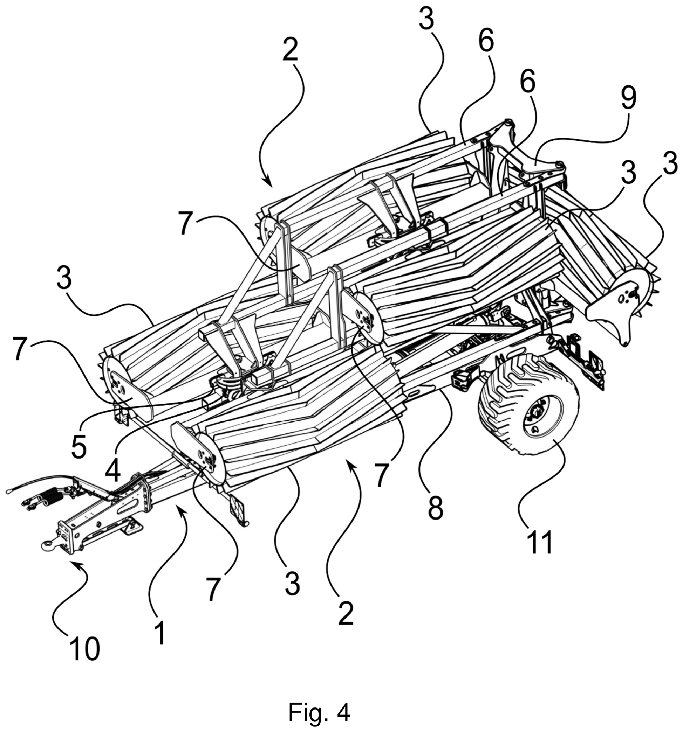

The securement of the working tools 3 against their pivotable movement occurs by moving the lateral foldable arms 2 from the working position according to fig. 1 to the transport position according to fig. 4.

In the working position, the lateral foldable arms 2 are unfolded from the central frame 1 and from each other and are, for example, oriented horizontally and perpendicular to the direction of travel. Therefore, the corresponding foldable frames 6, pivotable frames 7, and cutting rollers as the working tools 3 are also perpendicular to the direction of travel. The foldable frames 6 and the central frame 1 are oriented in their first positions as described above.

The lateral foldable arms 2 are moved to the transport position such that they are folded toward the central frame 1 and toward each other. Specifically, in the first exemplary embodiment described, this folding is implemented gradually. First, the opposite foldable frames 6 are folded toward the foldable part 9 of the central frame 1 into the second position of the foldable frames 6, in which the foldable frames 6 lie in a plane perpendicular to the plane of the foldable part 9 of the central frame 1. Subsequently, the foldable part 9 of the central frame 1 together with the foldable frames 6 is folded toward the fixed part 8 of the central frame 1 into the second position of the foldable part 9 of the central frame 1. In the second position of the foldable part 9 of the central frame 1, the foldable part 9 of the central frame 1 is oriented perpendicular to the fixed part 8 of the central frame 1, i.e., essentially vertically. Therefore, in the transport position, the lateral foldable arms 2 are oriented parallel to the central frame 1, i.e., for example horizontally, and in the direction of travel. The cutting rollers are also oriented horizontally and in the direction of travel.

Moving the lateral foldable arms 2 to the transport position brings the stop element 4 on the first lateral foldable arm 2 into contact with the support elements 5 on the opposite second lateral foldable arm 2, and, conversely, the stop element 4 on the second lateral foldable arm 2 comes into contact with the support elements 5 on the opposite first lateral foldable arm 2. The mutual contact between the corresponding stop elements 4 and support elements 5 is best seen in fig. 5. Due to the mutual bracing of the stop element 4 of one lateral foldable arm 2 against the support elements 5 of the second lateral foldable arm 2, the pivotable frame 7 is secured against its movement relative to the foldable frame 6, on both opposite lateral foldable arms 2. Thus, this also prevents the pivotable movement of the working tools 3 on both lateral foldable arms 2, which are thus mutually braced and secured via the stop elements 4 and support elements 5.

Further, the folding device according to the present invention may be implemented in many other alternative embodiments, which arise, e.g., from the alternatives mentioned in the section "Summary of the Invention".

In one alternative exemplary embodiment, the stop element 4 has, instead of a curved shape, a shape that contains a cutout, for example. This embodiment makes it possible for the stop element 4 to come into contact with the support elements 5 on the opposite lateral foldable arm 2 in the transport position of the lateral foldable arms 2 without obstacles.

In another alternative exemplary embodiment, there is not one common stop element 4 for every two support elements 5 arranged on the pivotable frame 7 that would abut against both of these support elements 5, but two individual stop elements 4 are used that abut against the support elements 5 individually.

In another alternative exemplary embodiment, the positions of the support elements 5 and the stop element 4 are interchanged, i.e., the support elements 5 are arranged on the foldable frame 6 and the stop element 4 is arranged on the pivotable frame 7. The design of the foldable frame 6 and the pivotable frame 7 is adapted such that the stop element 4 may come into contact with the support elements 5 on the opposite lateral foldable arm 2 in the transport position of the lateral foldable arms 2 without obstacles.

### List of Reference Signs

- 1 -: central frame
- 2 -: lateral foldable arm
- 3 -: working tool
- 4 -: stop element
- 5 -: support element
- 6 -: foldable frame
- 7 -: pivotable frame
- 8 -: fixed part of the central frame
- 9 -: foldable part of the central frame
- 10 -: connecting mechanism
- 11 -: wheel
- 12 -: first actuator
- 13 -: second actuator
- 14 -: washer

## Claims

1. A folding device for an agricultural tillage machine, wherein the folding device comprises a central frame (1) and at least two lateral foldable arms (2), wherein these lateral foldable arms (2) are rotatably movably attached opposite each other to the central frame (1) and are movable between a working position, in which the lateral foldable arms (2) are unfolded away from the central frame (1) and from each other, and a transport position, in which the lateral foldable arms (2) are folded toward the central frame (1) and mutually toward each other, wherein each lateral foldable arm (2) comprises at least one pivotably mounted working tool (3), **characterized in that** each of these lateral foldable arms (2) further comprises at least one stop element (4) and at least one support element (5), wherein one of these elements is mounted on the lateral foldable arm (2) pivotably together with the working tool (3), and relative to the other of these elements, the working tool (3) is pivotably movable, wherein in the transport position, at least one stop element (4) of the first one of these lateral foldable arms (2) is braced against at least one support element (5) of the second one of these lateral foldable arms (2) and at least one stop element (4) of the second one of these lateral foldable arms (2) is braced against at least one support element (5) of the first one of these lateral foldable arms (2).

2. The folding device according to claim 1, **characterized in that** the lateral foldable arm (2) comprises at least one foldable frame (6) and at least one pivotable frame (7), wherein the pivotable frame (7) is rotatably movably attached to the foldable frame (6), wherein the foldable frame (6) is attached to the central frame (1), and at least one working tool (3) is attached to the pivotable frame (7).

3. The folding device according to claim 2, **characterized in that** one element of the stop element (4) and support element (5) is positioned on the foldable frame (6) and the other element of the stop element (4) and support element (5) is positioned on the pivotable frame (7).

4. The folding device according to any one of the preceding claims, **characterized in that** at least one stop element (4) and at least one support element (5) are mutually offset relative to each other on the lateral foldable arm (2) in a direction perpendicular to the plane of the pivotable movement of the working tool (3).

5. The folding device according to any one of the preceding claims, **characterized in that** the lateral foldable arm (2) comprises at least two support elements (5).

6. The folding device according to claim 5, **characterized in that** the stop element (4) comprises at least two contact areas for contact with at least two support elements (5) of the opposite lateral foldable arm (2) in the transport position.

7. The folding device according to claim **5characterized in that** the lateral folding arm (2) comprises at least two stop elements (4) for contact with at least two support elements (5) of the opposite lateral foldable arm (2) in the transport position.

8. The folding device according to any one of the preceding claims, **characterized in that** at least one support element (5) is a support plate.

9. The folding device according to any one of the preceding claims, **characterized in that** the lateral foldable arms (2) are oriented parallel to the central frame (1) and in the direction of travel in the transport position.

10. The folding device according to any one of the preceding claims, **characterized in that** the central frame (1) comprises a fixed part (8) of the central frame (1) and a foldable part (9) of the central frame (1), wherein the foldable part (9) of the central frame (1) is rotatably movably attached to the fixed part (8) of the central frame (1) and wherein the lateral foldable arms (2) are rotatably movably attached to the foldable part (9) of the central frame (1).
